# EUROPEAN PATENT APPLICATION

(11) **EP 4 624 911 A1**
(43) Date of publication of application: **01.10.2025**
(21) Application number: 25166080.9
(22) Date of filing: 25.03.2025
(51) Int. Cl.: G01N 23/207, G01B 11/00, G01N 21/00, G01N 21/21, G01J 3/00

(54) **A TOOL FOR ANALYSING THE CHEMICAL COMPOSITION AND STRUCTURE OF NANOLAYERS**

(30) Priority: 25.03.2024 EP 24165987
(71) Applicant: Imec VZW, 3001 Leuven (BE)
(72) Inventor: Witting Larsen, Esben, 3001 Heverlee (BE)
(74) Representative: Patent Department IMEC

(57) **Abstract**

The tool (1) comprises a vacuum chamber (2) and a light source (3) coupled thereto and configured to produce a broadband light beam (4) in the soft X-ray or extreme ultraviolet range and introduce said beam into the vacuum chamber. The chamber comprises a sample holder (7) and a spectrograph unit (15) configured to record a spectral response based on light reflected off a sample (6) mounted on the holder. The holder is itself mounted on a first motorized table (25) configured to enable stepwise rotation of the table and thereby of a sample mounted in the holder, to thereby modulate the angle of incidence of the beam onto the sample. The spectrograph unit (15) is mounted on a second motorized table (35) configured to rotate around the sample holder and independently therefrom. The spectrograph unit (15) includes an angle sampling pipe (16). The tool (1) enables recording a full spectral response over a given photon energy range by a single measurement, and repeating such recording for a plurality of angles of incidence of the light beam (4) onto a sample (6). In this way, the tool allows to obtain the necessary data for determining the composition and structure of a nano-layer stack in a manner that is fast and that minimizes the structural impact on the analysed sample.

## Description

### Field of the Invention

The present invention is related to metrology tools for analysing nanoscaled layered 3D structures.

### State of the art.

Traditional electron-beam techniques for analysing nanostructured devices have limited chemical analytic capabilities. Thus, to further the device development, new characterization techniques with both high spatial resolution and element specificity are urgently needed for device development and characterization.

Light-based spectroscopy techniques are known to have molecular fingerprinting capabilities. One example is the use of the midinfrared (MIR, 2.5 - 10 µm) wavelength range for this purpose. However, due to the long wavelength of the MIR the spatial resolution of such techniques is limited to large areas. Also, MIR light exhibits large material penetration depths, and furthermore probes the delocalized valence electrons, thus local chemical environment is not easily accessible using MIR light.

X-ray absorption spectroscopy (XAS) provides the capability for both high spatial resolution and access to molecular fingerprinting with local information about neighbouring chemical structures, as it probes core level electrons. The chemical information is obtained by energy resolved XAS near atomic absorption resonances. When performed with soft X-rays it is traditionally called near edge X-ray absorption fine structure (NEXAFS), while it is called X-ray absorption near edge structure (XANES) when performed using hard X-rays. Document "Determination of optical constants of thin films in the EUV", Ciesielski et al, Applied Optics Vol. 61, No. 8, 10 March 2022 illustrates the applicability of wavelength-tuneable soft X-ray radiation delivered by a synchrotron for examining buried structures using grazing incidence soft X-ray scatterometry.

Nevertheless, the chemical sensitivity of these techniques is limited as synchrotron radiation is inherently monochromatic and the material chemical analysis must be conducted by repeating the same measurement for each individual wavelength. Also, although soft X-ray radiation is generally considered as providing non-destructive imaging, it does consist of ionization radiation. The repeated exposure required for the synchrotron-based approach can therefore potentially modify the chemical structure.

Patent publication document US2021/239464 discloses a method for extending scatterometry measurements of periodic structures created on a substrate into the deep ultraviolet (UV) and soft X-ray regions of the electromagnetic spectrum. The method comprises measuring the scattering of a high harmonic generated (HHG) beam, which is created by a laser. The HHG beam is scattered from the structures on the substrate. The scattered HHG beam is measured by a spectrometer or a detector sensitive to EUV or X-ray radiation.

The publication "Novel compact spectrophotometer for EUV-optics characterization", Starke et al, SPIE, vol. 6317, no. 631701 (2006-01-01) discloses a table-top spectrophotometer for measuring the spectral characteristics of extreme ultraviolet (EUV)-optics in the spectral range from 11 to 20 nm. The device is based on a polychromatic measurement principle using the direct irradiation of a compact EUV-tube for illuminating the sample and a broad-band spectrometer for detecting the probe and reference beam. The samples can be investigated under different angles of incidence and in respect to lateral dependencies. The spectrometer can be rotated around the sample as a function of the changing angle of incidence. Experimental results are limited to very specific sample types such as mirrors.

The setup of neither of the latter two cited documents is applicable for analysing more complex structured samples with stacked nanomaterials comprising multiple chemical elements where scattering and diffraction can occur at every interface, which for a broadband (continuum) light source would obfuscate the spectral response of the sample. The configuration described in US2021/239464 in particular needs the deployment of a well-calibrated reference sample to function. Furthermore, it necessitates the use of multiple diffraction orders fed into scatterometry algorithms to determine the properties of the examined samples.

### Summary of the invention

The invention aims to provide a tool that does not suffer from the abovenamed drawbacks. The invention is therefore related to a metrology tool and to a method as disclosed in the appended claims.

A metrology tool according to the invention comprises a vacuum chamber and a light source coupled thereto and configured to produce a broadband light beam in the soft X-ray (SXR) or extreme ultraviolet (EUV) range and introduce said beam into the vacuum chamber. The chamber comprises a sample holder and a spectrograph unit configured to record a spectral response based on light reflected off a sample mounted on the holder. The holder is itself mounted on a first motorized table configured to enable stepwise rotation of the table and thereby of a sample mounted in the holder, to thereby modulate the angle of incidence of the beam onto the sample. The spectrograph unit is mounted on a second motorized table configured to rotate around the sample holder and independently therefrom. The tool enables recording a full spectral response over a given photon energy range by a single measurement, and repeating such recording for a plurality of angles of incidence of the light beam onto the sample. In this way, the tool allows to obtain the necessary data for determining the composition and structure of a nano-layer stack in a manner that is fast and that minimizes the structural impact on the analysed sample.

The invention is in particular related to a metrology tool suitable for placing therein a sample comprising one or a stack of nanosized layers, the tool comprising a light source configured to produce a broadband light beam in the soft X-ray or extreme ultra violet range, and a vacuum chamber configured to receive said light beam and comprising a sample holder for mounting the sample thereon so that the light beam impinges on the sample at an angle of incidence relative to the orientation of said nanosized layer or layers, the vacuum chamber further comprising a spectrograph unit comprising a reflective diffraction grating, an angle-sampling pipe for allowing only reflected light propagating in a predefined propagation direction to impinge on the diffraction grating, and a camera for detecting the intensity of light diffracted by said grating as a function of the wavelengths within said range, wherein :
- the sample holder is itself mounted on a first motorized table configured to rotate the sample so as to modulate the angle of incidence on a step-by-step basis within a given angular range,
- the spectrograph unit is mounted on a second motorized table configured to rotate said unit around the sample and independently thereof, so that by rotating the spectrograph unit, the orientation of the diffraction grating relative to said predefined propagation direction can be kept constant for each angle of incidence.

The fact that the spectrograph unit includes an angle sampling pipe distinguishes the tool, in particular, from the above-cited prior art. The angle sampling pipe prohibits unwanted light scattered from the sample or stray light from impinging onto the diffraction grating. The angle sample further enables operation of the spectrograph unit in specular reflection mode, by allowing only the 0-order diffraction by the sample of light impinging on the sample.

The invention enables circumventing the requirement for recording multiple diffraction orders and allows deriving structural data by analysing the spectral response of the specular reflection (0-order diffraction). By examining this spectral response near EUV or SXR absorption resonances, the invention furthermore achieves high chemical sensitivity.

According to an embodiment, the light source is a laser-based High Harmonic Generation source. According to another embodiment, the light source is a plasma source.

The spectrograph unit may further comprise a photodiode arranged for detecting the 0-order of light diffracted by the diffraction grating.

According to an embodiment, the spectrograph unit further comprises a photodiode at the entrance to the angle sampling pipe. Said photodiode at the entrance to the angle sampling pipe may be a four-quadrant photodiode comprising four distinct quadrants and a central opening.

According to an embodiment, the light source is a broadband source producing light in a range of 200 - 600 eV or in a range of 60 - 200 eV.

According to an embodiment, the angle sampling pipe is a cylindrical pipe or a conical pipe or a pair of parallel plates.

The invention is also related to a method for analysing a material sample comprising a base substrate and one or a stack of nanosized layers on the base substrate, comprising the steps of :
- mounting the sample in the sample holder of a tool according to any one of the preceding claims,
- positioning the sample in accordance with a first angle of incidence of a light beam produced by said light source, relative to the orientation of said layer or layers,
- positioning the spectrograph unit so that the camera is able to detect first order diffracted light originating from light reflected off the sample and propagating through the angle-sampling pipe in accordance with a predefined propagation direction,
- recording via said spectrograph unit a spectral response determined by said detected first order diffracted light,
- by stepwise rotation of the first motorized table, rotating the sample step by step in accordance with a plurality of angles of incidence within a given angular range,
- at each angle of incidence, and by a respective stepwise rotation of the second motorized table, rotating the spectrograph unit so as to maintain a constant orientation of the diffraction grating relative to said predefined propagation direction,
- at each angle of incidence, recording via said spectrograph unit respective spectral responses determined by said detected first order diffracted light,
- composing a 2-dimensional map of the recorded responses by juxtaposing the acquired spectral responses as a function of the applied angles of incidence,
- deriving from said map data relative to the composition and structure of the one or more nanosized layers.

According to an embodiment, said predefined propagation direction is the propagation direction of the 0-order diffraction of light impinging on the sample.

### Brief description of the figures

Figure 1 is a conceptual top-down view of a metrology tool in accordance with an embodiment of the invention.
Figures 2 and 3 are detail images of a light beam impinging on a sample mounted in the metrology tool shown in Figure 1.
Figure 4 illustrates another embodiment of a tool according to the invention, comprising an additional photodiode.
Figure 5 shows both the top-down view and a side view of the sample holder and the first motorized table in the metrology tool of Figure 1.
Figures 6 and 7 illustrate the tool of Figure 1 wherein the sample has been rotated relative to the position shown in Figure 1.

### Detailed description of an embodiment of the invention

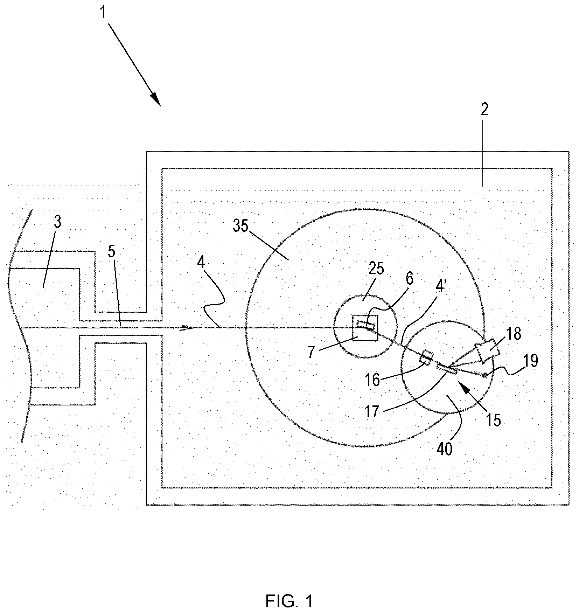

Referring to the conceptual top-down view shown in Figure 1 of a metrology tool 1 according to an embodiment of the invention, the tool comprises a vacuum chamber 2 and a light source 3 configured to produce a broadband light beam 4 in the soft X-ray range or in the extreme ultraviolet (EUV) range, and introduce the beam into the vacuum chamber 2 through an aperture 5 in one of the chamber walls. The light source 4 is not shown in detail. It can be a laser-based HHG (high harmonic generation) source as known in the art. With "broadband beam" is meant a beam containing a continuous range of wavelengths λ, hence a continuous range of photon energies expressed in eV and related to the wavelengths by the relation E = hc/λ (with h equal to Planck's constant and c equal to the speed of light).

According to exemplary embodiments, a 2.3 µm laser based on optical parametric chirped pulse amplification can be deployed to make soft X-ray light in the 200 - 600 eV range, while a 1 µm laser can deliver 60 - 200 eV photons.

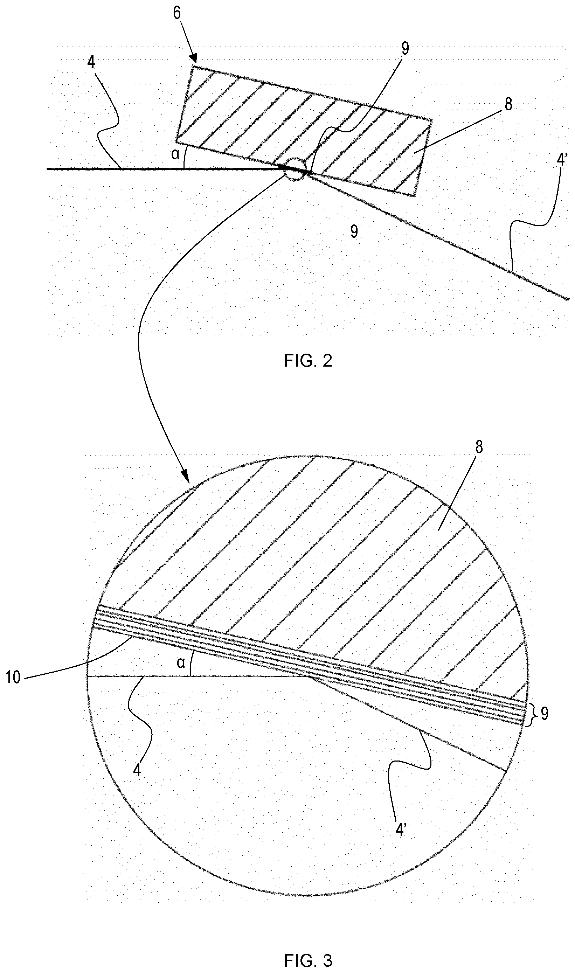

The light beam 4 impinges on a sample 6 mounted on a sample holder 7 placed in the vacuum chamber 2. The detail images in Figures 2 and 3 illustrate vertical cross-section views of the sample 6, showing that the sample 6 comprises a base substrate 8 and a stack of nanosized layers 9 on the base substrate. With "nanosized layers" is meant layers having a thickness in the range of a few nanometres up to a few tens of nanometres, for example the thickness of the layers 9 may be between 5 nm and 50 nm, or between 5 nm and 20 nm. The top layer defines the upper planar surface 10 of the sample. The beam 4 propagates along a propagation direction and impinges on the upper planar surface 10. In the condition shown in Figures 1 to 3, the sample 6 is oriented relative to the beam 4 so that the beam 4 impinges on said upper planar surface 10 at an angle of incidence α of about 23°. The light is focused onto the sample 6 to maximize the spatial resolution. The light is polarized according to a given polarization direction perpendicular to the propagation direction of the beam 4. Light is reflected off the sample, as visualized by the reflected beam 4'. Depending on the structure of the sample surface, the reflected light may be scattered to some degree.

Referring again to Figure 1, the tool 1 further includes a spectrograph unit 15 comprising a number of components, including an angle-sampling pipe 16 and a reflective diffraction grating 17. The angle-sampling pipe 16 is configured to allow only reflected light propagating in a specific direction to fall onto the diffraction grating 17.

In particular, the angle sampling pipe enables allowing only the 0-order light diffraction of a sample. This is also known as the specular reflection. This cannot be done when the spectrograph comprises an entrance slit, as in US2021/239464. When a spectrometer with a simple entrance slit is utilized on a broadband or wavelength continuum light source the spectral response can be obfuscated or blurred as the slit will define the entrance point of the spectrometer. In contrast, by utilizing an angular sampling pipe instead of a simple slit the angular acceptance of the spectrograph unit is heavily reduced without changing the source plane, and it ensures that the incidence angle onto the grating is not changed. The angular sampling pipe 16 is preferably utilized in reflectometry mode, where only the specular reflection is measured.

The angle sampling pipe can be a cylindrical pipe with a circular cross-section or a conical pipe with a circular cross-section. Within the present context, a pair of parallel plates may also be regarded as an angle sampling pipe.

The grating 17 diffracts the light impinging on it in different directions for the respective diffraction orders 0,1,2 etc. The first order diffracted light is captured by a camera 18 configured to detect and measure the light intensity as a function of the photon energies contained in the 1^{st} order diffracted light signal (hereafter referred to as the 'spectral response'). These photon energies are the same as the energies contained in the original impinging light beam 4. Due to interaction between the original beam 4 and the sample 6, the intensity of the reflected light is modulated, showing for example a peak in the spectral response at a particular photon energy, indicating the presence of a particular material. The strength and/or shape of the peak can be used to determine structural characteristics of the detected materials, such as the thickness of the nanolayers 9. The grating may be a variable-line-space X-ray grating known as such. The EUV/soft X-ray camera 18 may be an in-vacuum camera known as such, for example a CMOS camera or a CCD camera. In the embodiment shown, the spectrograph unit 15 further comprises a photodiode 19 positioned to detect the 0-order diffracted light (diffracted from the grating 17). This measurement can be used to monitor instabilities in power of the incident beam 4. The photodiode 19 is however not an obligatory component of a tool according to the invention.

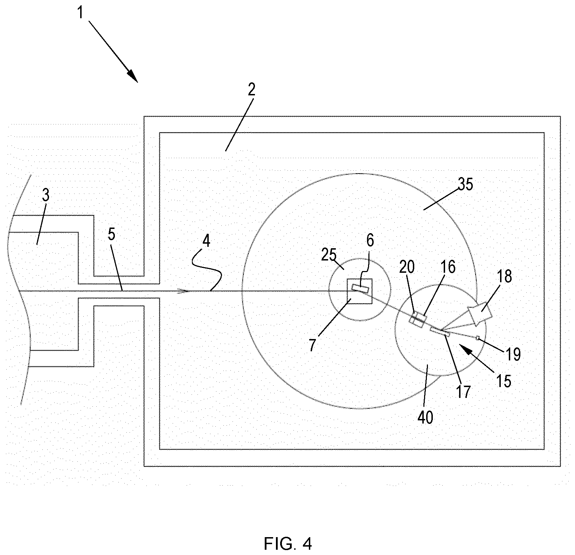

According to another embodiment, the spectrograph unit 15 further comprises a photodiode positioned at the entrance of the sampling pipe 16. This diode can measure the incoming light intensity. By comparing the intensities measured by the diode at the entrance of the sampling pipe with the intensity measured by the camera 18 and the diode 19, the grating efficiency of the 0-order and 1-order diffraction can be evaluated. According to the embodiment shown in Figure 4, the diode 20 at the entrance of the sampling pipe is a four-quadrant diode, comprising four distinct quadrant parts and a central opening for admitting the 0-order diffracted beam. The quadrant photodiode enables fast readout of beam pointing by comparing the readout signals from the 4 different quadrants. The readout can be faster with the diode than with the EUV camera 18, thereby enabling in-situ measurements of beam-drifts during measurements, i.e., both pointing and power drifts. A 4-quadrant photodiode is known as such. A suitable diode applicable in the tool illustrated in Figure 4 is the type AXUVPS7 from supplier Opto Diode.

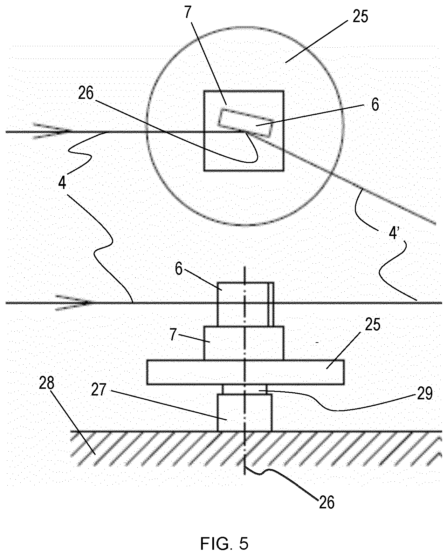

As illustrated in the side view in Figure 5, the sample 6 is mounted on a sample holder 7 that is itself mounted on a motorized rotation table 25 configured to rotate about a central rotation axis 26. The sample holder 7 is represented conceptually as a block onto which the sample 6 is placed. In reality, this may be any holder suitable for holding a sample of typical dimensions applicable in NEXAFS or similar analysis techniques. The sample holder 7 may include position adjustment means for accurately positioning the sample relative to the propagation direction and the polarization direction of the incoming light beam 4 and relative to the rotation table 25.

The sample is positioned as shown in the drawing, i.e. with the central rotation axis 26 of the table 25 intersecting the impingement area of the beam 4, so that the beam impinges on the same point of the sample regardless of the angular position of the rotation table 25. The measurement can be repeated for a plurality of impingement areas on the sample 6.

The rotation table 25 is motorized, meaning that the table is coupled to a motor 27 for rotating the table about the central axis 26. In Figure 5, the motor is schematically represented as a block 27 mounted on a chassis 28 that is fixed to the vacuum chamber 2, with the table 25 fixed to the output axle 29 of the motor, but any equivalent motorized configuration is possible, for example including a motor that is not coaxial with the table 25 and coupled thereto by a suitable transmission. The motor 27 is an electrical motor coupled to a control unit configured to control the angular position of the table 25. The control unit is not shown and may be physically present outside the vacuum chamber 2, and coupled to the motor 27 by a wired or wireless connection.

The control unit is configured to enable positioning the table 25 and thereby the sample 6 at a plurality of angular positions within a given angular range, with a well-defined angular spacing of for example 1° between consecutive angular positions. In this way, the angle of incidence α of the light beam 4 onto the sample 6 can be changed on a step-by-step basis.

In order to measure comparable responses for a plurality of angles of incidence α, the spectrograph unit 15 is mounted on a second motorized table 35 configured to rotate about the central rotation axis 26 of the first table 25. In the embodiment shown, the second table 35 is a disc arranged coaxially with respect to the first table 25. The rotation of the disc 35 could be motorized by a motor and a suitable gear transmission (not shown) but any equivalent arrangement is possible. The spectrograph unit 15 could for example be mounted on a table that is movable by a suitable motor on a circular rail arranged around the sample holder 7.

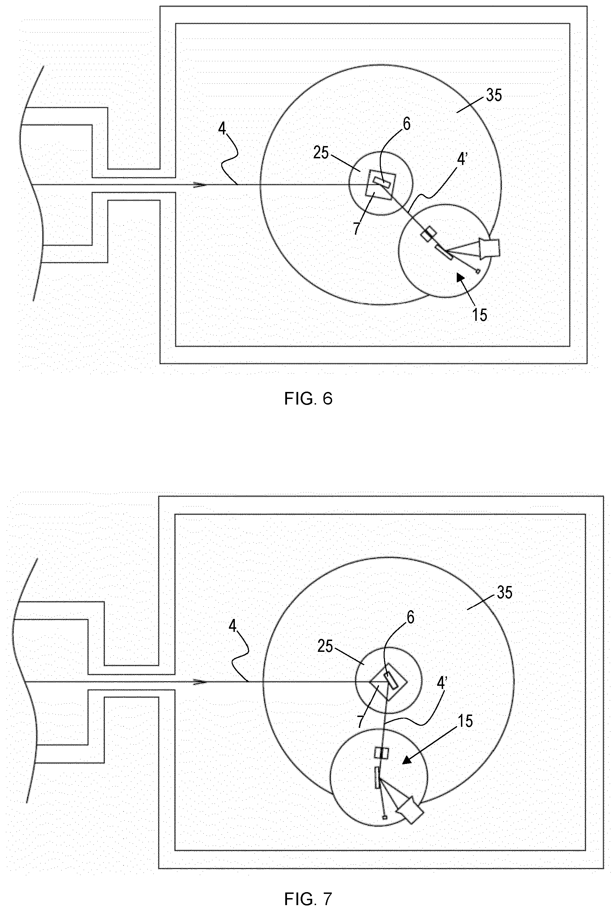

Obtaining comparable responses means that the light admitted through the angle sampling pipe 16 must fall onto the diffraction grating 17 at the same angle of incidence relative to said grating for every angular position of the sample 6. In order to achieve this, the spectrograph unit 15 as a whole is rotated about the axis 26 by controlling the rotation of the second motorized table 35. When the sample is rotated about axis 26 by a given angular value, the spectrograph unit 15 must be rotated by twice this value in order to maintain the same orientation of the diffraction grating 17 relative to the light reflected off the sample 6. This is illustrated in Figures 6 and 7, showing the position of the spectrograph unit 15 when the sample is rotated over 10° and 45° respectively, with respect to the position shown in Figure 1.

The tool 1 thereby enables obtaining a 2D-map showing the recorded spectral responses measured by the camera 18 for a plurality of incidence angles α, for example for 91 values of said angle : α = 0°, 1°, 2°,...90°. In such a 2D map, the recorded responses are juxtaposed as a function of the applied angles of incidence. A similar 2D map was obtained in the study "Determination of optical constants of thin films in the EUV" referred to above wherein monochromatic light in the soft X-ray range was produced by a synchrotron. The difference with that approach however is that the tool according to the invention enables recording the response simultaneously for a full range of photon energies, whereas the prior art approach required applying different photon energies on a step-by-step basis for each angle of incidence. The approach enabled by the present invention is therefore faster and less intrusive in terms of potential damage to the sample due to long term exposure to ionization radiation.

The manner in which the composition and structural characteristics of the nanolayers may be derived from the above-named 2D-map may be the same as applied in the prior art, for example in the above-referenced document "Determination of optical constants of thin films in the EUV". However, any alternative algorithm for deriving such data can be applied on a 2D map obtained using a tool according to the invention.

Instead of a laser-based HHG source, other types of light sources for producing broadband light in the soft X-ray or extreme UV range may be applied in a tool according to the invention, including plasma sources or the so-called 'pink beam' obtained from bending magnets in a synchrotron.

Using any of the abovenamed light sources, the tool 1 can be used to determine spectral responses by averaging the signals acquired by the camera 18 over a given integration time.

In the embodiment shown, the spectrograph unit 15 is represented as an assembly of components (angle sampling pipe, grating, camera, diode) which are mounted in a fixed relation to each other on a circular disc 40. Between measurements performed at different angles of incidence of the light beam 4 on the sample 6, i.e. at different angular positions of the first and second motorized tables 25 and 35, the orientation of the disc 40 remains fixed relative to the second motorized table 35. According to a preferred embodiment however, the disc 40 is rotatable about its central axis relative to the second table 35, in order to be able to set the angular position of the grating 17 prior to starting said measurements at different angles of incidence.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A metrology tool (1) suitable for placing therein a sample (6) comprising one or a stack of nanosized layers (9), the tool comprising a light source (3) configured to produce a broadband light beam (4) in the soft X-ray or extreme ultra violet range, and a vacuum chamber (2) configured to receive said light beam (4) and comprising a sample holder (7) for mounting the sample thereon so that the light beam impinges on the sample at an angle of incidence (α) relative to the orientation of said nanosized layer or layers (9), the vacuum chamber further comprising a spectrograph unit (15) comprising a reflective diffraction grating (17), an angle-sampling pipe (16) for allowing only reflected light propagating in a predefined propagation direction to impinge on the diffraction grating (17), and a camera (18) for detecting the intensity of light diffracted by said grating (17) as a function of the wavelengths within said range, wherein :
- the sample holder (7) is itself mounted on a first motorized table (25) configured to rotate the sample (6) so as to modulate the angle of incidence on a step-by-step basis within a given angular range,
- the spectrograph unit (15) is mounted on a second motorized table (35) configured to rotate said unit (15) around the sample (6) and independently thereof, so that by rotating the spectrograph unit (15), the orientation of the diffraction grating (17) relative to said predefined propagation direction of the reflected light can be kept constant for each angle of incidence (α).

2. The tool according to claim 1, wherein the light source (3) is a laser-based High Harmonic Generation source.

3. The tool according to claim 1 wherein the light source (3) is a plasma source.

4. The tool according to any one of the preceding claims, wherein the spectrograph unit further comprises a photodiode (19) arranged for detecting the 0-order of light diffracted by the diffraction grating (17).

5. The tool according to any one of the preceding claims, wherein the spectrograph unit (15) further comprises a photodiode (20) at the entrance to the angle sampling pipe (16).

6. The tool according to claim 5, wherein said photodiode (20) at the entrance to the angle sampling pipe (16) is a four-quadrant photodiode comprising four distinct quadrants and a central opening.

7. The tool according to any one of the preceding claims, wherein the light source is a broadband source producing light in a range of 200 - 600 eV or in a range of 60 - 200 eV.

8. The tool according to any one of the preceding claims, wherein the angle sampling pipe (16) is a cylindrical pipe or a conical pipe or a pair of parallel plates.

9. A method for analysing a material sample (6) comprising a base substrate (8) and one or a stack of nanosized layers (9) on the base substrate, comprising the steps of :
- mounting the sample (6) in the sample holder (7) of a tool (1) according to any one of the preceding claims,
- positioning the sample in accordance with a first angle of incidence (α) of a light beam (4) produced by said light source (3), relative to the orientation of said layer or layers (9),
- positioning the spectrograph unit (15) so that the camera (18) is able to detect first order diffracted light originating from light reflected off the sample (6) and propagating through the angle-sampling pipe (16) in accordance with a predefined propagation direction,
- recording via said spectrograph unit (15) a spectral response determined by said detected first order diffracted light,
- by stepwise rotation of the first motorized table (25), rotating the sample step by step in accordance with a plurality of angles of incidence within a given angular range,
- at each angle of incidence, and by a respective stepwise rotation of the second motorized table (35), rotating the spectrograph unit (15) so as to maintain a constant orientation of the diffraction grating (17) relative to said predefined propagation direction of the light reflected off the sample,
- at each angle of incidence, recording via said spectrograph unit (15) respective spectral responses determined by said detected first order diffracted light,
- composing a 2-dimensional map of the recorded responses by juxtaposing the acquired spectral responses as a function of the applied angles of incidence,
- deriving from said map data relative to the composition and structure of the one or more nanosized layers (9).

10. The method according to claim 9, wherein said predefined propagation direction is the propagation direction of the 0-order diffraction of light impinging on the sample (6).
